# EUROPÄISCHE PATENTANMELDUNG

(11) **EP 1 095 847 A1**
(43) Veröffentlichungstag der Anmeldung: **02.05.2001**
(21) Anmeldenummer: 00123281.8
(22) Anmeldetag: 20.10.2000
(51) Int. Cl.: B62K 23/04, B62M 25/04

(54) **Betätigungseinrichtung für Fahrradgangschaltungen mit Zwei-Zug-System**

(30) Priorität: 27.10.1999 DE 19951700
(71) Anmelder: HANS HELMIG GmbH, D-51491 Overath (DE)
(72) Erfinder: Heymer, Arne, Dr.-Ing., 50767 Köln (DE); Walter, Nico, 52062 Aachen (DE)
(74) Vertreter: Nau, Walter, Dipl.-Ing.

(57) **Zusammenfassung**

Schaltvorrichtung (1) mit einem drehbaren Griff, insbesondere zur Betätigung von Fahrradgangschaltungen über zwei am Griff angreifende Zugmittel (10, 11) durch Umsetzen der Drehbewegung des Griffes in eine Längsbewegung der Zugmittel (10, 11) und mit einem Gehäuseteil (2), das vorzugsweise an einem Fahrradlenker, Fahrradrahmen oder dergleichen fixierbar ist und zur Führung des Drehgriffes und zur Abstützung der Hüllen (8, 9) der Zugmittel (10, 11) dient. Dabei ist ein Einstellmechanismus vorgesehen, mittels dessen das eine Zugmittel (10) um das Maß in die eine Richtung verstellt wird, um das das andere Zugmittel (11) in die andere Richtung verstellt wird.

## Beschreibung

Die Erfindung betrifft eine Schaltvorrichtung mit einem drehbaren Griff, insbesondere zur Betätigung von Fahrradgangschaltungen nach dem Oberbegriff des Patentanspruchs 1.

Die Schaltvorrichtung für eine Fahrradgangschaltung wird üblicherweise mit einer Verstelleinrichtung versehen, die es ermöglicht, eine bestimmte Position des Umwerfers der Gangschaltung einer bestimmten Position des Drehgriffs zuzuordnen. Bei herkömmlichen Schaltvorrichtungen mit einem Zugmittel und mit einer dem Zugmittel entgegenwirkenden Feder wird dazu in der Regel die Abstützung der Hülle des Zugmittels gegenüber dem festen Gehäuseteil verschoben und somit die wirksame Länge der Hülle gegenüber dem unverlängerten Seil des Zugmittels verändert.
Diese Verstellung ist für eine gattungsgemäße Schaltvorrichtung mit zwei am Griff angreifenden Zugmitteln nicht geeignet, da eine entsprechende Verstellung zu einer Veränderung der Spannung der Zugmittel der Schaltvorrichtung und nicht zu einer Verstellung des Griffes gegenüber dem Umwerfer der Schaltvorrichtung führt.

Aufgabe der vorliegenden Erfindung ist es daher, eine gattungsgemäße Schaltvorrichtung so zu verbessern, daß mit einfachen Mitteln eine Einstellung des Umwerfers der Schaltvorrichtung gegenüber dem Griff der Schaltvorrichtung erfolgt.

Gelöst wird die Aufgabe der Erfindung durch eine Positioniereinrichtung mittels der der Griff oder ein mit ihm verbundenes Teil mit dem Gehäuseteil in Wirkverbindung steht, wobei die Positioniereinrichtung in Drehrichtung des Griffes hintereinander angeordnete Rasten oder Nuten und eine mit diesen in Wirkverbindung stehende federbelastete Nase oder Ausnehmung aufweist, und durch einen Einstellmechanismus mittels dessen das eine Zugmittel, und zwar das Seil gegenüber der Hülle oder umgekehrt, um ein solches Maß in die eine Richtung verstellt wird, um das das andere Zugmittel, Seil gegenüber Hülle oder umgekehrt, in die andere Richtung verstellt wird. Dadurch wird, ohne daß eine Verstellung der Spannung in den Zugmitteln bewirkt wird, eine echte Einstellung des Umwerfers gegenüber dem Drehgriff erreicht, so daß eine Zuordnung des Umwerfers zu den Rastungen der Positioniereinrichtung, die den einzelnen Gängen entsprechen, erfolgt.
Es sei darauf hingewiesen, daß unter dem Begriff "Zwei-Zug-System" zwei getrennte Züge mit je einem Seil und je einer Hülle verstanden werden kann oder auch ein wesentlich längeres Seil, das mit zwei Hüllen zusammenarbeitet. In dem einen Fall werden beide Enden einer Seite am Umwerfer oder am Drehgriff bzw. einem mit dem Drehgriff in Wirkverbindung stehenden Teil befestigt, während im anderen Fall das Seil etwa in seiner Mitte mit dem Drehgriff oder einem mit dem Drehgriff in Wirkverbindung stehenden Teil verklemmt wird. Die Hüllen können auch zu einer Einheit zusammengefaßt sein oder aus einer Baueinheit bestehen.

In vorteilhafter Ausgestaltung der Erfindung wird vorgeschlagen, daß die Abstützungen der Hüllen der Zugmittel Schrauben oder Hülsen mit Gewindeverbindungen zum Gehäuseteil oder einem mit diesem verbundenen Teil aufweisen und daß an den Schrauben oder Hülsen Scheiben, Räder oder dergleichen drehfest angeordnet sind, die miteinander in Wirkverbindung stehen. Durch diese Ausgestaltung wird erreicht, daß durch Verdrehen einer der Scheiben oder Räder die andere Scheibe oder das andere Rad mitgenommen wird, so daß eine gleichzeitige Verstellung des einen und des anderen Zugmittels erfolgt. Für die Übertragung der Drehbewegung von einer Scheibe zur anderen bzw. von einem Rad zum anderen kommen verschiedene Mittel in Frage. Haben die Scheiben oder Räder verschiedene Größen. bzw. unterschiedliche Wälzkreisradien, so sollte, um eine gleichmäßige Verstellung der beiden Zugmittel zu erreichen, das Gewinde entsprechend angepaßt sein (größere Steigung, kleinere Steigung). Je nach Übertragungsmittel sollte zur gleichmäßigen Verstellung ein Links- oder ein Rechtsgewinde für die Schrauben bzw. Hülsen gewählt werden.

Vorzugsweise sind die Räder als Zahnräder ausgebildet, die miteinander kämmen und denselben Wälzkreisradius haben, wobei die Gewinde gleichsinnig und mit derselben Steigung ausgeführt sind. Dadurch wird erreicht, daß eine gleichmäßige Verstellung erfolgt. Alternativ wird vorgeschlagen, daß Zahnscheiben vorgesehen sind, die mittels eines Zahnriemens oder Kette verbunden sind und denselben Wälzkreisradius haben. Dann sind die Gewinde gegensinnig und mit derselben Steigung ausgeführt.

In vorteilhafter Weise wird die Breite der Zähne, insbesondere der Zahnräder, größer als die Hälfte des Gesamtmaßes der Verstellung beider Zugmittel gewählt. Dadurch ist sichergestellt, daß durch die Verschiebung der Schrauben bzw. Hülsen gegeneinander wegen des Gewindes die Zähne auch noch in den Endstellungen der Verstellung der Schrauben im Eingriff sind.
Es wird davon ausgegangen, daß die Scheiben oder Räder drehfest und axial fixiert auf den Schrauben bzw. den Hülsen angeordnet sind. Deshalb wird zur Montage die eine Schraube bzw. Hülse mit dem entsprechenden Zahnrad weitgehend auf oder in das Gehäuseteil aufgeschraubt und dann die zweite Schraube bzw. Hülse entsprechend angesetzt und die Zähne der Zahnräder ineinandergreifend eingesetzt, so daß dann eine gleichmäßige Verstellung erfolgen kann.
Wird ein Zahnriemen oder Kette gewählt, so reicht es aus, wenn dieser nach Fertigstellung der Montage angebracht wird. Vorzugsweise hat dann zumindest eine Zahnscheibe eine axiale Fixierung für den Zahnriemen.
Weiterhin wird vorgeschlagen, daß zumindest eine der Scheiben, Räder oder dergleichen an den Schrauben oder Hülse abnehmbar und axial fixierbar ausgeführt ist. Dadurch kann insbesondere bei Verwendung von ineinandergreifenden Zahnrädern dieses Zahnrad nachträglich auf die Schraube oder Hülse aufgesetzt und in die Zähne des Gegenrades eingepaßt werden. Dadurch wird die Montage vereinfacht und es ist auch möglich, unabhängig von der Verstellung der Zugmittel, noch eine Änderung der Spannung der Zugmittel vorzunehmen, in dem das eine Zahnrad abgenommen, die Schrauben bzw. Hülsen entsprechend verstellt werden und anschließend das Zahnrad wieder montiert wird.

In weiterer Ausgestaltung der Erfindung wird vorgeschlagen, daß die Nase oder ein die Nase tragendes Bauteil in Drehrichtung des Griffes in Bezug auf den Griff oder auf das Gehäuseteil verstellbar ist. In diesem Ausführungsbeispiel erfolgt die Einstellung der Zugmittel nicht über eine Verschiebung der Abstützung der Hüllen sondern durch eine Verschiebung der Seile in den Hüllen durch Verdrehen des Griffes mit Nachjustierung der Rastung, da es ja darauf ankommt, daß die Rastung des Drehgriffes passend zu der Stellung des Umwerfers der Fahrradgangschaltung ausgerichtet ist oder umgekehrt. Je nach Zuordnung der Bauteile zueinander kann daher die Verstellung der Nase oder Ausnehmung im Gehäuseteil bzw. am Griff vorgenommen werden.

Gemäß einer modifizierten Ausgestaltung der Erfindung sind die Rasten oder Nuten oder ein diese aufnehmendes Bauteil in Drehrichtung des Griffes in Bezug auf den Griff oder auf das Gehäuseteil verstellbar ausgebildet und die Nase oder Ausnehmung feststehend ausgeführt. Das Ergebnis ist prinzipiell dasselbe, lediglich erfolgt hier eine Verstellung der Rasten bzw. vorzugsweise des die Rasten oder Nuten aufnehmenden Bauteils und zwar im Griffbereich oder im Gehäuseteil.

In vorteilhafter Weise ist ein Positionierring und eine das Seil oder die Seile der Zugmittel aufnehmende Spule vorgesehen und der Positionierring und die Spule sind gegeneinander drehverstellbar. Dabei kann die Rastung (Nase oder Ausnehmung oder das die Nase tragende Bauteil und die Rasten oder Nuten oder das diese aufnehmende Bauteil) feststehend ausgebildet sein, weil bei diesem Ausführungsbeispiel die das Seil bzw. die Seile aufnehmende Spule gegenüber dem Positionierring verdreht bzw. verstellt wird, um die Einstellung des Drehgriffs bzw. der Fahrradgangschaltung vorzunehmen.

Zur weiteren Erläuterung der Erfindung wird auf die Zeichnungen verwiesen, in denen Ausführungsbeispiele der Erfindung vereinfacht dargestellt sind.
Es zeigen:
- Figur 1:: zwei skizziert dargestellte Seitenansichten einer Schaltvorrichtung mit Schnitt durch das Gehäuseteil und die Zugmittel, wobei zur Verstellung der Zugmittel Schrauben vorgesehen sind,
- Figur 2:: zwei skizzierte Darstellungen der Schaltvorrichtung gemäß Figur 1, wobei die Verstellung der Hüllen mittels Hülsen erfolgt,
- Figur 3:: zwei skizzierte Darstellungen der Schaltvorrichtung gemäß Figur 1, wobei die Verstellung durch einen Positionierring und eine Spule erfolgt und
- Figur 4:: zwei skizzierte Darstellungen der Schaltvorrichtung nach Figur 1, bei der die Einstellung durch Verschwenken eines die Rastnase tragenden Bauteils erfolgt.

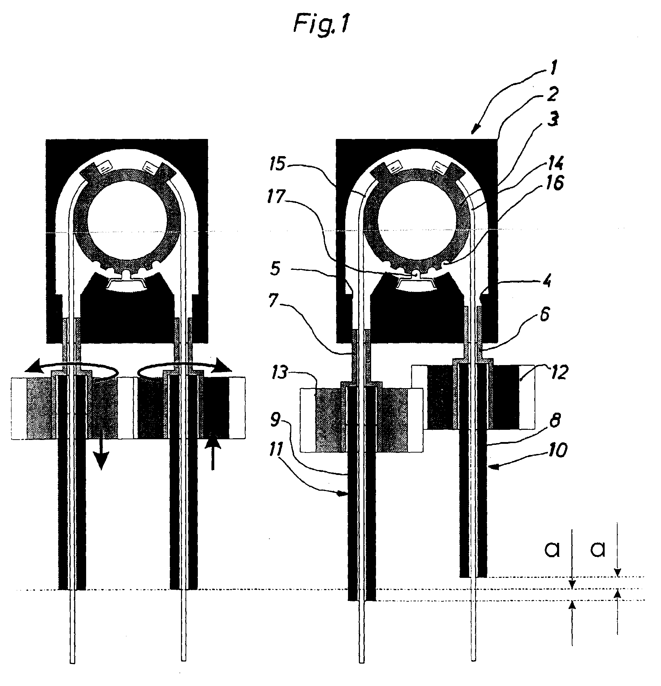

Die Figuren 1 bis 4 weisen jeweils zwei skizzierte Schaltvorrichtungen auf, die sich dadurch unterscheiden, daß mittels Pfeile in der linken Schaltvorrichtung die Maßnahmen zur Einstellung der Zugmittel angedeutet sind, während in der jeweiligen rechten Abbildung die Veränderung bei den Zugmitteln durch gestrichelte Linien und Maßpfeile mit den Bezugszeichen "a" vorgesehen sind. Dabei sind die rechten Schaltvorrichtungen mit Bezugsziffern versehen.

In den Figuren 1 bis 4 ist, soweit im einzelnen dargestellt, mit 1 eine Schaltvorrichtung bezeichnet, die einen Gehäuseteil 2 aufweist, der nicht näher dargestellt an einem Fahrradlenker oder Fahrradrahmen fixiert ist. Innerhalb des Gehäuseteils 2 ist eine mit 3 bezeichnete Spule dargestellt, die gemäß den Figuren 1, 2 und 4 mit einem nicht sichtbaren Drehgriff verbunden ist. Die Spule 3 und der Drehgriff sind, ebenfalls nicht dargestellt, drehbar im Gehäuseteil 2 und/oder am Fahrradlenker geführt.

Im Gehäuseteil 2 sind gemäß Figur 1, tangential zur Spule 3 ausgerichtet, Gewindebohrungen 4 und 5 vorgesehen, in die Schrauben 6 und 7 eingedreht sind, die an ihren dem Gehäuseteil abgewandten Enden je eine Erweiterung aufweisen, in die die Hüllen 8 und 9 der Zugmittel 10 und 11 eingesetzt sind. Mit den Schrauben 6 und 7 sind jeweils Zahnräder 12 und 13 fest verbunden, die eine solche Größe aufweisen, daß sie miteinander kämmen. Die Zahnräder haben denselben Teilkreisradius und die Gewinde der Schrauben sind gleichsinnig und mit gleicher Steigung ausgeführt, so daß, wie den Pfeilen der linken Hälfte der Figur 1 zu entnehmen ist, durch Verdrehen eines Zahnrades eine Verstellung des einen und anderen Zugmittels erfolgt, da in den Hüllen 8 und 9 Seile 14 und 15 der Zugmittel 10 und 11 gelagert sind, die in Ösen der Spule eingehängt sind. Die Spule 3 bzw. ein mit der Spule 3 verbundenes Bauteil weist Nuten 16 auf, die mit einer federbelasteten Nase 17 in Wirkverbindung stehen. Die federbelastete Nase 17 ist im Gehäuseteil 2 festgelegt, so daß der Umwerfer der Fahrradgangschaltung zu der jeweilig eingerasteten Stellung zwischen den Nuten und der federbelasteten Nase entsprechend den Gängen, durch Verdrehen der Zahnräder 12 und 13 eingestellt werden kann. Es sei darauf hingewiesen, daß eines der Zahnräder auch axial verschiebbar und fixierbar, beispielsweise mittels eines Federrings, auf der Schraube angeordnet sein kann, so daß nach Abnahme dieses Zahnrades auch ein Nachspannen der beiden Zugmittel ohne Veränderung der Einstellung erfolgen kann.

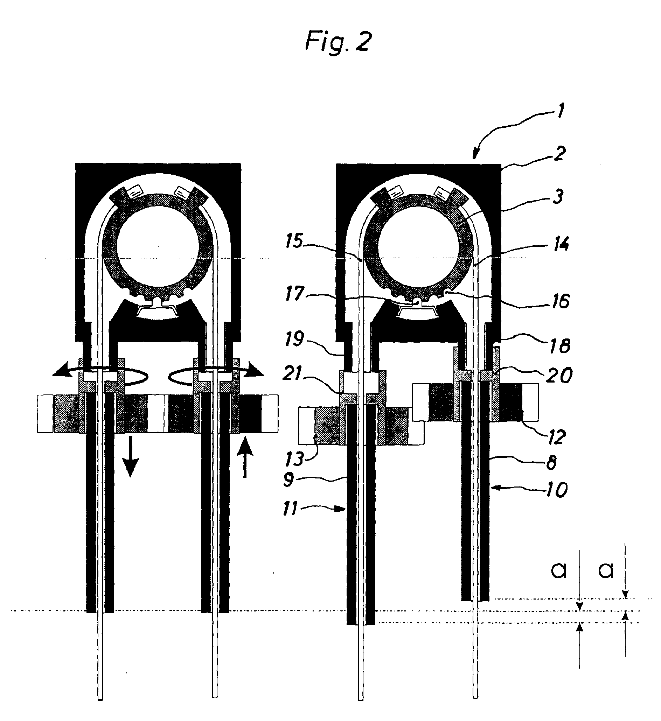

Die Schaltvorrichtung 1 gemäß Figur 2 ist weitgehend identisch mit der Schaltvorrichtung nach Figur 1 ausgebildet. Der Unterschied besteht darin, daß am Gehäuseteil 2 Gewindebuchsen 18, 19 vorgesehen sind, in die statt der Schrauben Hülsen 20 und 21 aufgeschraubt sind, die an ihren abgewandten Enden die Hüllen 8 und 9 abstützen. Ansonsten entspricht die Ausgestaltung nach Figur 2 der Ausgestaltung nach Figur 1.

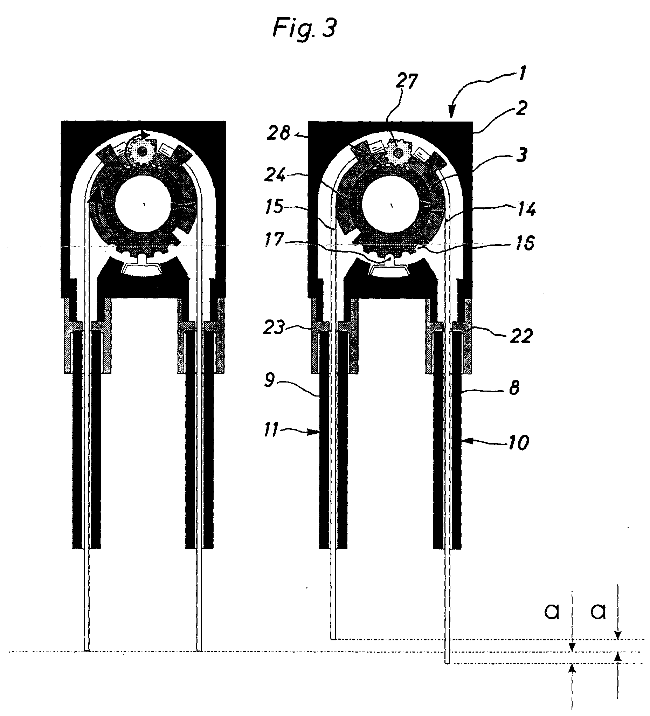

In der Ausgestaltung nach Figur 3 hat das Gehäuseteil 2 zwar auch Büchsen. Diese sind aber nicht mit Gewinden versehen und dienen lediglich zur Führung von Steckhülsen, die die Hüllen 8 und 9 der Zugmittel 10 und 11 abstützen. In dem Ausführungsbeispiel nach Figur 3 ist koaxial zu der Spule 3 ein Positionierring 24 vorgesehen, der die Nuten 16 aufweist, die mit der federbelasteten Nase 17, die im Gehäuseteil 2 festgelegt ist, in Wirkverbindung steht. In diesem Ausführungsbeispiel erfolgt die Einstellung der Zugmittel durch Verdrehen der Spule gegenüber dem Positionierring oder umgekehrt.

Dazu dient ein Zahnsegment 28 an dem Positionierring 24 mit dem ein Zahnritzel 27 kämmt, das an der Spule 3 gelagert ist. Das Zahnritzel 27 ist, in Figur 3 nicht dargestellt, von außen zugänglich und kann von dort eingestellt bzw. verdreht werden. Der Griff kann dabei entweder mit dem Positionierring oder mit der Spule drehfest verbunden sein.

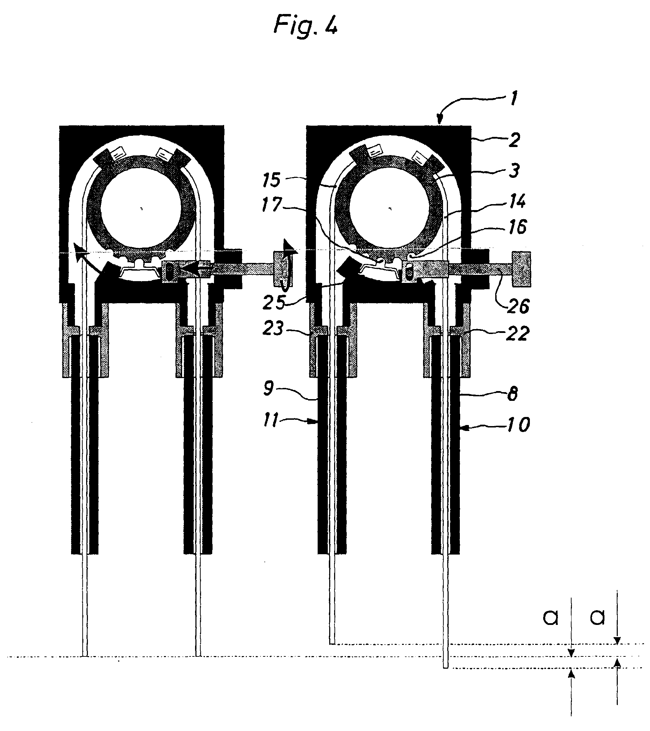

Im Ausführungsbeispiel gemäß Figur 4 sind ebenfalls Steckhülsen vorgesehen. Dabei weist die Spule 3 wiederum, wie in den Figuren 1 und 2, Nuten 16 auf, die mit der federbelasteten Nase 17 in Wirkverbindung stehen. Die federbelastete Nase 17 ist in einem Bauteil 25 angeordnet, das seinerseits koaxial zur Spule 3 angeordnet ist und tangential zu dieser verstellt werden kann. Zum Verstellen dient eine Schraube 26, die an dem Bauteil 25 so angreift, daß es in beiden Richtungen verstellt und fixiert werden kann. Durch Verschwenken des Bauteils mit der federbelasteten Nase erfolgt eine Einstellung der Rastung bzw. Positionierung passend zum Umwerfer bzw. dessen Gangstufe der Fahrradgangschaltung.

## Patentansprüche

1. Schaltvorrichtung (1) mit einem drehbaren Griff, insbesondere zur Betätigung von Fahrradgangschaltungen über zwei am Griff angreifende Zugmittel (10, 11) durch Umsetzen der Drehbewegung des Griffes in eine Längsbewegung der Zugmittel (10, 11) mittels einer Spule (3) und mit einem Gehäuseteil (2), das vorzugsweise an einem Fahrradlenker, Fahrradrahmen oder dergleichen fixierbar ist und zur Führung des Drehgriffes und zur Abstützung der Hüllen (8, 9) der Zugmittel (10, 11) dient,
***gekennzeichnet durch*** eine Positioniereinrichtung mittels der der Griff oder ein mit ihm verbundenes Teil mit dem Gehäuseteil (2) in Wirkverbindung steht, wobei die Positioniereinrichtung in Drehrichtung des Griffes hintereinander angeordnete Rasten oder Nuten (16) und eine mit diesen in Wirkverbindung stehende federbelastete Nase (17) oder Ausnehmung aufweist, und durch einen Einstellmechanismus mittels dessen das eine Zugmittel (10), und zwar das Seil (14) gegenüber der Hülle (8) oder umgekehrt, um ein solches Maß in die eine Richtung verstellt wird, um das das andere Zugmittel (11), Seil (15) gegenüber Hülle (9) oder umgekehrt, in die andere Richtung verstellt wird.

2. Schaltvorrichtung nach Anspruch 1,
***dadurch gekennzeichnet, daß*** die Abstützungen der Hüllen (8, 9) der Zugmittel (10, 11) Schrauben (6, 7) oder Hülsen (20, 21) mit Gewindeverbindungen zum Gehäuseteil (2) oder einem mit diesem verbundenen Teil aufweisen und daß an den Schrauben (6, 7) oder Hülsen (20, 21) Scheiben, Räder oder dergleichen drehfest angeordnet sind, die miteinander in Wirkverbindung stehen.

3. Schaltvorrichtung nach Anspruch 2,
***dadurch gekennzeichnet, daß*** die Räder Zahnräder (12, 13) sind, die miteinander kämmen und denselben Wälzkreisradius haben, und daß die Gewinde gleichsinnig und mit derselben Steigung ausgeführt sind.

4. Schaltvorrichtung nach Anspruch 2,
***dadurch gekennzeichnet, daß*** die Scheiben Zahnscheiben sind, die mittels eines Zahnriemens oder Kette verbunden sind und denselben Wälzkreisradius haben, und daß die Gewinde gegensinnig und mit derselben Steigung ausgeführt sind.

5. Schaltvorrichtung nach einem der vorhergehenden Ansprüche,
***dadurch gekennzeichnet, daß*** die Breite der Zähne zumindest der Zahnräder (12, 13) größer als die Hälfte des Gesamtmaßes der Einstellung beider Zugmittel (10, 11) ist.

6. Schaltvorrichtung nach einem der vorhergehenden Ansprüche,
***dadurch gekennzeichnet, daß*** zumindest eine der Scheiben, Räder oder dergleichen an den Schrauben (6, 7) oder Hülsen (20, 21) abnehmbar und axial fixierbar ausgeführt ist.

7. Schaltvorrichtung nach Anspruch 1,
***dadurch gekennzeichnet, daß*** die Nase (17) oder Ausnehmung oder ein die Nase tragendes Bauteil (25) in Drehrichtung des Griffes in Bezug auf den Griff oder auf das Gehäuseteil (2) einstellbar ist und die Rasten oder Nuten (16) gegenüber jeweils dem anderen der vorgenannten Teile feststehend ausgeführt sind.

8. Schaltvorrichtung nach Anspruch 7,
***dadurch gekennzeichnet, daß*** die Rasten oder Nuten (16) oder ein diese aufnehmendes Bauteil in Drehrichtung des Griffes in Bezug auf den Griff oder auf das Gehäuseteil (2) verstellbar sind und daß die Nase (17) oder Ausnehmung gegenüber jeweils dem anderen der vorgenannten Teile feststehend ausgeführt ist.

9. Schaltvorrichtung nach einem der Ansprüche 7 oder 8,
***dadurch gekennzeichnet, daß*** ein Positionierring (24), der die Nase (17) bzw. Ausnehmung oder Rasten bzw. Nuten (16) aufweist, im wesentlichen koaxial zur Spule (3) angeordnet ist und daß der Positionierring (24) und die Spule (3) gegeneinander drehverstellbar sind.

10. Schaltvorrichtung nach Anspruch 9,
***dadurch gekennzeichnet, daß*** der Positionierring (24) gegenüber der Spule (3) mittels eines Zahnritzels (27) und eines mit dem Ritzel in Wirkverbindung stehenden Zahnsegments (28) drehverstellbar ist, wobei das Zahnritzel (27) und das Zahnsegment (28) jeweils mit dem Positionierring (24) oder der Spule (3) und umgekehrt in Wirkverbindung stehen.
